Europäisches Patentamt

European Patent Office

Office européen des brevets

(19)

(11) Numéro de publication : **0 207 825**
**B1**

(12) # FASCICULE DE BREVET EUROPÉEN

(45) Date de publication du fascicule du brevet :
28.09.88

(51) Int. Cl.⁴ : **B 29 C 67/12, B 32 B 15/08**

(21) Numéro de dépôt : 86401103.6

(22) Date de dépôt : 26.05.86

(54) Matériau de protection contre la foudre.

(30) Priorité : 06.06.85 FR 8508549

(43) Date de publication de la demande :
07.01.87 Bulletin 87/02

(45) Mention de la délivrance du brevet :
28.09.88 Bulletin 88/39

(84) Etats contractants désignés :
AT BE CH DE GB IT LI NL SE

(56) Documents cités :
EP-A- 0 074 263
GB-A- 1 287 573
US-A- 3 755 713
US-A- 4 186 237
US-A- 4 349 859
US-A- 4 352 142
US-A- 4 429 341

(73) Titulaire : **AEROSPATIALE SOCIETE NATIONALE INDUSTRIELLE**
**37, Boulevard de Montmorency**
**F-75781 Paris Cédex 16 (FR)**

(72) Inventeur : **Decaix, Roland**
**20 rue Hélène Boucher**
**F-33700 Merignac (FR)**

(74) Mandataire : **Barnay, André François**
**Cabinet Barnay 80 rue Saint-Lazare**
**F-75009 Paris (FR)**

Jouve, 18, rue St-Denis, 75001 Paris, France

EP 0 207 825 B1

## Description

La présente invention concerne d'une façon générale la protection d'objets contre la foudre, correspondant au préambule de la revendication 1, notamment des matériels susceptibles d'être détériorés par celle-ci dans leurs emballages lors de leur transport, et elle est plus particulièrement relative à un conteneur pour le transport de tels matériels.

Des appareils de valeur, tels que des appareils pyrotechniques, nucléaires, chimiques, électriques, électroniques ou autres sont couramment transportés dans des conteneurs étanches rigides et résistants qui sont souvent exposés aux intempéries lors de leur transport, et par suite également à être frappés par la foudre.

La qualification de résistance à la foudre est obtenue à la suite d'essais sévères, notamment suivant une norme « TSS 8-6 » qui comprend deux composantes, soit : a) une composante dite rapide (200 kA en 45 µs) et b) une composante dite continue (0,5 kA en 1 s).

La qualification est obtenue après le test si d'une part le matériau n'est pas détruit sur toute son épaisseur (ne présente pas de trou) et, d'autre part, si la température à 15 cm de la face opposée à l'introduction du courant reste inférieure à 100 °C.

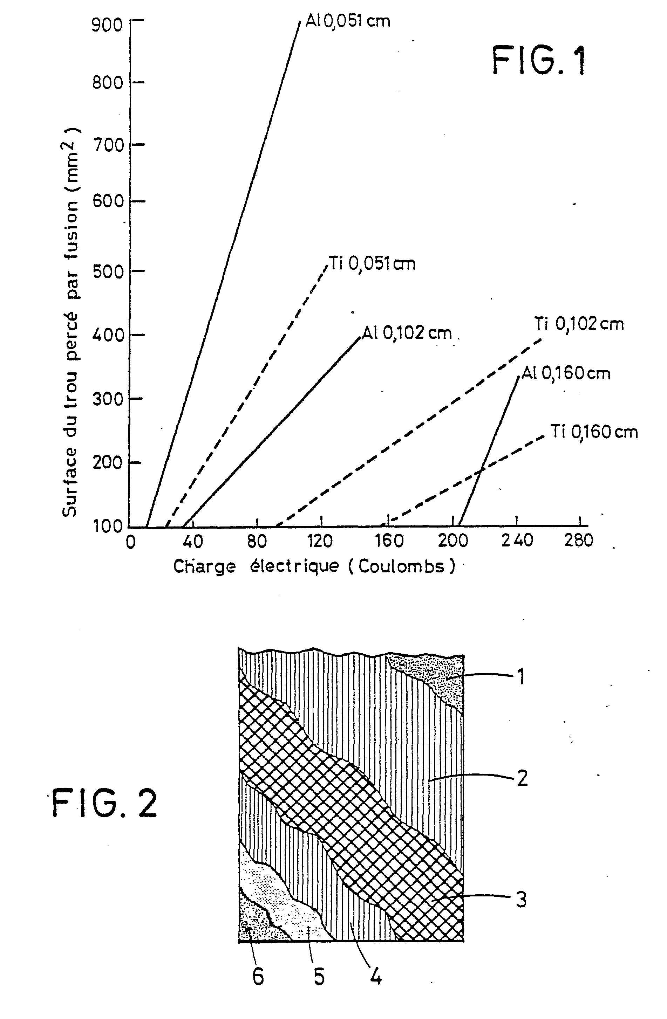

Bien entendu on peut obtenir une protection efficace au moyen d'un conteneur entièrement métallique, par exemple en tôle d'acier ayant une épaisseur de 5 mm (on a représenté à la figure 1 un diagramme qui indique les valeurs de percement pour différentes épaisseurs d'aluminium et de titane, à titre d'exemple comparatif).

Cependant, le poids d'un tel conteneur est évidemment prohibitif et est disproportionné par rapport à celui des matériels à transporter. On a donc cherché à réaliser des conteneurs de transport présentant à la fois des propriétés satisfaisantes de résistance mécanique et de résistance à la foudre, mais non pénalisés par un poids excessif et d'autre part d'un prix de revient plus avantageux.

Les matériaux composites moulés en fibres/résine sont mécaniquement résistants et d'un poids acceptable, mais sont électriquement isolants. On a en conséquence recherché une solution en utilisant une paroi composite comprenant des conducteurs métalliques incorporés, notamment sous la forme d'un grillage ou d'un treillis.

On a réalisé un conteneur de transport en stratifié de verre/résine dans lequel est noyé un treillis en métal relié à toutes les pièces métalliques apparaissant habituellement sur les faces extérieures ainsi qu'à un circuit propre à chaque conteneur et pouvant être connecté à une prise de terre. Ce dispositif permet d'écouler le courant de foudre pénétrant directement par les pièces métalliques extérieures.

Les essais effectués ont montré qu'un tel conteneur pouvait résister à la foudre dans le cas où celle-ci frappe directement les parties métalliques apparentes. Cependant, les essais de tenue à la foudre de la paroi seule ont été effectués et ont montré que ce dispositif de protection n'est efficace qu'en ce qui concerne la composante dite rapide, mais non pas la composante continue.

Le brevet US-A-4 186 237 a pour objet un matériau composite destiné à être utilisé notamment en construction aéronautique pour accroître la sécurité des avions contre la foudre.

Ce matériau comprend un substrat en matière plastique pouvant être renforcée de fibres métalliques ou autres, ou en métal, une couche isolante en oxyde métallique, une couche de métal, une couche contenant des additifs pouvant libérer des ions sous l'action d'une décharge électrique, et enfin une couche superficielle en métal.

Lorsque ce matériau est frappé par la foudre, le champ électrique initial en tête de l'étincelle induit des courants et provoque également une évaporation de la couche métallique externe et en conséquence la libération d'un nuage d'ions à la rencontre de l'éclair.

Ce matériau a donc pour but de produire un effet s'opposant à celui de la décharge électrique de la foudre en diffusant celle-ci sur une large surface afin d'éviter sa concentration en un seul point, mais non pas de conduire le courant électrique reçu à la terre, ce qui est évidemment impossible sur un aéronef.

Le problème ainsi résolu est différent de celui que vise à résoudre l'invention, puisque des conteneurs de transport sont en contact avec la masse de l'engin de transport, lui-même en contact avec le sol, ou avec l'eau dans le cas d'un navire. Le matériau décrit dans ce document ne pourrait pas résister aux essais précités sous (a) et (b).

Le brevet US-A-3 894 608 a pour but de réaliser une cage de Faraday reliée au sol, dans une carrosserie d'automobile non métallique, au moyen d'une série de conducteurs électriques noyés dans la masse de la carrosserie et reliés entre eux ainsi qu'à un conducteur frottant sur le sol. La matière elle-même ne pourrait pas non plus résister aux essais précités de résistance à la foudre.

L'invention a pour objet de réaliser un matériau composite selon le préambule de la revendication 1, caractérisé en ce qu'il comprend un treillis en bronze incorporé audit matériau composite, au moins un élément de connexion adapté pour être relié à la terre et relié auxdites pièces métalliques elles-mêmes reliées audit treillis, par un conducteur métallique incorporé au matériau entre ledit treillis et la surface interne, et une couche externe de peinture conductrice, comme il est décrit dans la revendication indépendante 1.

Suivant une autre caractéristique de l'invention le bronze utilisé est le bronze dit « à braser » et présente une teneur en étain de 5 à 7 %.

De préférence, le bronze utilisé comprend de 92,8 à 94 % de cuivre, de 5,8 à 7 % d'étain et environ 0,15 % de phosphore, le reste étant du fer.

Suivant un mode de réalisation préféré de l'invention, ledit treillis est formé de fils de bronze de la composition précitée, ayant un diamètre d'environ 0,07 mm, formant des mailles de 0,94 à 1,04 mm, dont la masse au m² est d'environ 64 à 72 g et ayant une surface de passage de 85 à 97 %. D'autres développements avantageux du matériau composite selon la présente invention font l'objet des revendications dépendantes additionnelles.

La description qui va suivre, en regard des dessins annexés à titre d'exemples non limitatifs permettra de bien comprendre comment la présente invention peut être mise en pratique.

La figure 1 est un diagramme montrant les valeurs de percement de la foudre sur les parois d'un conteneur en aluminium et en titane.

La figure 2 est une vue partielle avec arrachements montrant la superposition des différentes couches dans la paroi d'un conteneur de transport suivant l'invention.

La figure 3 est une vue partielle en section d'une partie d'un conteneur suivant l'invention.

En se référant aux dessins, la figure 1 est un diagramme qui montre les surfaces (en mm²) des trous percés par fusion par une décharge de foudre dans des parois en aluminium et en titane, en fonction de la quantité de charge électrique exprimée en Coulombs.

La figure 2 est une vue « écorchée » d'un fragment de paroi d'un conteneur de transport suivant l'invention.

Cette paroi composite comprend une première couche 2 de matériau composite fibres de verre/résine, un treillis 3 en bronze de qualité dite « à braser » recouvert d'une seconde couche 4 de matériau composite fibres de verre/résine, la surface externe du matériau étant revêtue d'une couche 5 d'une peinture conductrice pouvant être revêtue elle-même, pour l'aspect extérieur, d'un gel-coat 6 pouvant être coloré suivant l'exigence. Un gel-coat 1 peut également être prévu pour recouvrir la première couche 2 de matériau composite pour les mêmes raisons d'aspect.

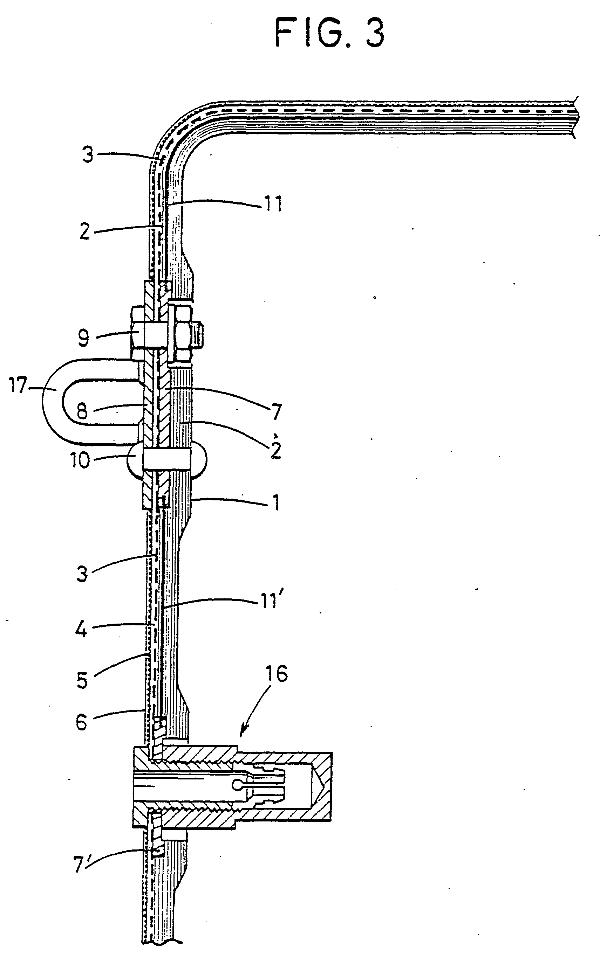

La figure 3 montre en section une partie de la paroi d'un conteneur de transport réalisé suivant l'invention, avec des pièces métalliques apparentes, comme connu en soi.

La paroi du conteneur est constituée, de l'intérieur vers l'extérieur, par une couche porteuse de résine armée et de fibres de verre désignée par la référence 2. La couche porteuse 2 présente l'épaisseur suffisante pour assurer la résistance mécanique nécessaire pour la paroi du conteneur.

Sur cette première couche 2 est disposé un treillis 3 en bronze de la qualité dite « à braser » recouvert lui-même par une seconde couche 4 de résine armée de fibres de verre ayant une épaisseur d'environ 1 mm.

Le conteneur comporte des inserts métalliques 7 assurant le contact électrique avec le treillis 3, par tout moyen ou procédé connu et plus particulièrement par brasage, permettant ainsi la continuité électrique entre les pièces métalliques extérieures 8, 17 telles que poignées et autres moyens de levage, de suspension, de fixation ou de fermeture, et ledit treillis 3 par l'intermédiaire de boulons conducteurs 9. Il est à noter que lesdits inserts 7 participent au renforcement mécanique des liaisons des pièces 8 avec la structure 2, 4 du conteneur par l'intermédiaire des rivets 10.

Dans cette combinaison préférée de réalisation, un conducteur électrique 11 relie également les inserts 7 entre eux.

La couche externe 4 est revêtue d'une couche 5 d'une peinture conductrice, par exemple composée de résine polyuréthane chargée de noir d'acétylène à raison d'une épaisseur d'environ 35 μm et qui est elle-même recouverte d'un gel-coat 6 de finition et coloration.

D'une façon appropriée il est prévu dans la paroi du conteneur un élément de connexion 16 qui est relié au conducteur 11' ainsi qu'au treillis en bronze 3, par l'intermédiaire d'un insert 7', et qui est adapté pour recevoir un dispositif de connexion (non représenté) destiné à être relié à la terre ou à une masse, par un conducteur électrique approprié.

Le bronze utilisé pour le treillis 3, de la qualité dite « à braser », présente suivant l'invention une teneur en étain de 5 à 7 %.

La composition de ce bronze est la suivante :
Cuivre : de 92,8 à 94 %
Etain : de 5,8 à 7 %
Phosphore : environ 0,15 %
Fer : environ 0,01 %.

Les meilleurs résultats aux essais ont été obtenus avec un treillis de fils de bronze ayant la composition précitée, ayant un diamètre d'environ 0,07 mm et formant entre eux des mailles de 0,94 à 1,04 mm, la masse totale au m² du treillis étant d'environ 64 à 72 grammes, la surface de passage (la surface totale des mailles par rapport à la surface globale du treillis) étant de 85 à 97 % de cette dernière.

La meilleure protection contre la foudre et également vis-à-vis de phénomènes électromagnétiques serait bien entendu obtenue au moyen d'une feuille continue de bronze ayant la composition précitée. Cependant l'accrochage de la résine du matériau composite sur une telle feuille continue serait aléatoire, tandis que l'utilisation d'un treillis permet à la résine de former des ponts entre les fils rendant ainsi solidaires les couches 2 et 4.

Si la foudre tombe sur une partie métallique apparente telle que les dispositifs 7, 8, 9, 10 le courant de foudre s'écoule instantanément par le circuit métallique constitué du treillis et du fil métallique reliant tous les éléments métalliques jusqu'à la prise de masse. Dans la norme d'essais précitée, les composantes rapide et continue sont ainsi écoulées toutes les deux par ce circuit.

Si la foudre tombe sur une partie non métallique apparente, l'équivalent de la composante rapide est absorbé par la couche de peinture conductrice 5 et l'équivalent de la composante continue est écoulé par le treillis jusqu'à la prise de masse 16.

Bien que l'invention ait été décrite dans son application à un conteneur de transport pour des matériels susceptibles d'être détériorés par la foudre, on comprend qu'elle peut également s'appliquer à d'autres conteneurs tels que par exemple les boîtiers d'ensembles fonctionnels comprenant des composants sensibles à la foudre ou encore à des enceintes destinées à assurer une protection contre la foudre et d'une façon générale dans tous les cas où une enceinte ou paroi protectrice contre la foudre doit être appliquée, par exemple également pour des bardages ou couvertures de bâtiments.

## Revendications

1. Matériau composite destiné à être utilisé en tant que protection pour des objets susceptibles d'être frappés par la foudre, du type fibres/résine armé de fils métalliques entrelacés, et comportant sur sa surface externe des pièces métalliques apparentes, caractérisé en ce qu'il comprend un treillis (3) en bronze incorporé audit matériau composite (2, 4), au moins un élément de connexion (16) adapté pour être relié à la terre et relié auxdites pièces métalliques (7, 17, 8) elles-mêmes reliées audit treillis (3), par un conducteur métallique (11) incorporé au matériau entre ledit treillis et sa surface interne, et une couche externe (5) de peinture conductrice.

2. Matériau suivant la revendication 1, caractérisé en ce que le bronze utilisé pour le treillis (3) est de qualité dite « à braser » d'une teneur en étain de 5 à 7 %.

3. Matériau suivant la revendication 2, caractérisé en ce que le bronze utilisé pour le treillis (3) comprend de 92,8 à 94 % de cuivre, de 5,8 à 7 % d'étain, environ 0,15 % de phosphore, environ 0,01 % de fer.

4. Matériau suivant la revendication 3, caractérisé en ce que ledit treillis (3) est formé de fils de bronze de la composition précitée, ayant un diamètre d'environ 0,07 mm, formant des mailles de 0,94 à 1,04 mm, dont la masse au m² est d'environ 64 à 72 g et ayant une surface de passage de 85 à 97 %.

5. Matériau suivant l'une quelconque des revendications précédentes, caractérisé en ce que ledit treillis (3) en bronze est situé à une distance d'environ 1 mm de la surface externe du matériau.

6. Matériau suivant la revendication 1, caractérisé en ce que ladite peinture conductrice comprend une résine polyuréthane chargée de noir d'acétylène, ladite couche (5) ayant une épaisseur d'environ 35 µm.

7. Conteneur de transport pour matériel susceptible d'être détérioré par la foudre, du type réalisé en matériau composite fibres/résine, armé de fils métalliques entrelacés, caractérisé en ce qu'il est réalisé au moyen d'un matériau tel que défini suivant l'une quelconque des revendications 1 à 6.

## Claims

1. A composite material for use in protecting objects liable to be struck by lightning, of fibre-resin type reinforced with interlaced metallic filaments and having noticeable metal parts on its outer surface, characterised in that it is provided with a bronze lattice (3) incorporated in said composite material (2, 4), at least one connecting member (16) suitable for connection to earth and connected to said metal parts (7, 17, 8), which are themselves connected to said lattice (3), by a metallic conductor (11) incorporated in the material between its inner surface and said lattice, and an outer layer (5) of conductive paint.

2. A material according to claim 1, characterised in that the bronze used for the lattice (3) is of so-called « brazing » quality and has a tin content of from 5 to 7 %.

3. A material according to claim 2, characterised in that the bronze used for the lattice (3) comprises from 92.8 to 94 % copper, from 5.8 to 7 % tin, about 0.15 % phosphorus and about 0.01 % iron.

4. A material according to claim 3, characterised in that said lattice (3) is formed from filaments of bronze having the aforementioned composition, having a diameter of about 0.07 mm, forming meshes of from 0.94 to 1.04 mm, of which the mass per m² is from about 64 to 72 g and having a passage area of from 85 to 97 %.

5. A material according to any one of the preceding claims, characterised in that said bronze lattice (3) is disposed at a distance of about 1 mm from the outer surface of the material.

6. A material according to claim 1, characterised in that said conductive paint comprises a polyurethane resin filled with acetylene black, said layer (5) having a thickness of about 35 µm.

7. A container for the transportation of equipment liable to be damaged by lightning, of a type made from composite fibre-resin material reinforced with interlaced metallic filaments, characterised in that it is made from a material as defined in accordance with any one of claims 1 to 6.

## Patentansprüche

1. Zusammengesetztes Material zur Verwendung beim Schutz von Objekten, die vom Blitz getroffen werden können, des Typs Faser/Harz, das mit verflochtenen Metallfäden armiert ist und das auf seiner äußeren Fläche sichtbare Metallstücke aufweist, dadurch gekennzeichnet, daß es ein Gitterwerk (3) aus Bronze, das in das zusammengesetzte Material (2, 4) eingebracht ist, wenigstens ein Verbindungselement (16), das mit Erde und den Metallstücken (7, 17, 8), die selbst mit dem Gitterwerk (3) verbunden sind, über einen in das Material zwischen dem Gitterwerk und seiner Innenfläche eingebrachten metallischen Leiter (11) verbunden werden kann, und eine äußere Schicht (5) aus leitfähiger Farbe umfaßt.

2. Material nach Anspruch 1, dadurch gekennzeichnet, daß die für das Gitterwerk (3) verwendete Bronze von sogenannter « lötbarer » Qualität mit einem Zinngehalt von 5 bis 7 % ist.

3. Material nach Anspruch 2, dadurch gekennzeichnet, daß die für das Gitterwerk (3) verwendete Bronze 92,8 bis 94 % Kupfer, von 5,8 bis 7 % Zinn, ungefähr 0,15 % Phosphor und ungefähr 0,01 % Eisen aufweist.

4. Material nach Anspruch 3, dadurch gekennzeichnet, daß das Gitterwerk (3) aus Bronzefäden der vorgenannten Zusammensetzung gebildet ist, die einen Durchmesser von ungefähr 0,07 mm haben, Maschen von 0,94 bis 1,04 mm bilden, deren Masse pro m² ungefähr 64 bis 72 g ist und die eine Durchtrittsfläche von 85 bis 97 % haben.

5. Material nach einem der vorhergehenden Ansprüche, dadurch gekennzeichnet, daß das Gitterwerk (3) aus Bronze in einem Abstand von ungefähr 1 mm von der äußeren Fläche des Materials angeordnet ist.

6. Material nach Anspruch 1, dadurch gekennzeichnet, daß die leitende Farbe ein Polyurethanharz aufweist, das mit Acetylenschwarz versetzt ist, wobei die Schicht (5) eine Dicke von ungefähr 35 μm hat.

7. Transportbehälter für ein Material, das durch Blitz zerstört werden kann, des Typs der aus einem zusammengesetzten Material Faser/Harz hergestellt ist, und mit verflochtenen Metallfäden armiert ist, dadurch gekennzeichnet, daß er mittels eines Materials hergestellt ist, das durch irgendeinen der Ansprüche 1 bis 6 definiert ist.

**0 207 825**

FIG.1

FIG. 2

# FIG. 3